# EUROPÄISCHE PATENTSCHRIFT

(11) **EP 2 741 881 B1**
(45) Veröffentlichungstag und Bekanntmachung des Hinweises auf die Patenterteilung: **20.01.2016**
(21) Anmeldenummer: 12745682.0
(22) Anmeldetag: 06.08.2012
(51) Int. Cl.: B23B 29/034

(54) **WERKZEUGKOPF FÜR EINE WERKZEUGMASCHINE**
TOOL HOLDER HEAD FOR A MACHINE TOOL
TETE PORTE-OUTIL POUR UNE MACHINE-OUTIL

(30) Priorität: 09.08.2011 DE 102011080701
(43) Veröffentlichungstag der Anmeldung: 18.06.2014
(73) Patentinhaber: Komet Group GmbH, 74354 Besigheim (DE)
(72) Erfinder: FRANK, Jochen, 74265 Dettingen Teck (DE); SPORS, Benno, 71672 Marbach (DE)
(74) Vertreter: Pfiz, Thomas
(86) Internationale Anmeldenummer: PCT/EP2012/065319
(87) Internationale Veröffentlichungsnummer: WO 2013/020941

(56) Entgegenhaltungen:
- EP-A1- 0 344 616
- EP-A1- 2 033 727
- DE-A1- 2 247 612
- DE-A1-102007 007 377
- US-A- 4 101 239

## Beschreibung

Die Erfindung betrifft einen Werkzeugkopf für eine Werkzeugmaschine gemäß dem Oberbegriff des Patentanspruchs 1.

Aus der EP 0 491 724 B1 ist ein Werkzeugkopf für den Einsatz in Werkzeugmaschinen mit einem Schieber zur Aufnahme eines Schneidwerkzeugs bekannt. Für das Verstellen des Schiebers ist eine Verstellspindel vorgesehen, die mit einer am Schieber ausgebildeten Schrägverzahnung in Eingriff steht. Ein Werkzeugkopf gemäß dem Oberbegriff des Anspruchs 1 ist aus EP 0 344 616 A1 bekannt*.*

Damit ein Schieber mit einem Schneidwerkzeug in einem Werkzeugkopf der eingangs genannten Art präzise eingestellt werden kann, ist eine möglichst spielfreie und zugleich auch reibungsarme Führung des Schiebers im Werkzeugkopf erforderlich. Wenn die Führung zu ungenau ist, kann sich in der Werkzeugmaschine ein am Schieber aufgenommenes Schneidwerkzeug selbsttätig und unkontrolliert verstellen. An der im Drehzahlbereich von beispielsweise 20.000 Umdrehungen pro Minute rotierenden Maschinenspindel ist der Schieber großen Kräften ausgesetzt, die als Fliehkräfte und Zerspankräfte an dem Schneidwerkzeug angreifen. Die Gefahr einer selbsttätigen Verstellung des Schiebers besteht insbesondere dann, wenn das Schneidwerkzeug nicht mit dem Werkstück in Eingriff ist. Problematisch bei der Festlegung des Schiebers mit hohen Klemmkräften ist, dass die Genauigkeit der Schieberpositionierung und der Positionserfassung beeinträchtigt werden kann.

Ausgehend hiervon liegt der Erfindung die Aufgabe zugrunde, die im Stand der Technik bekannten Vorrichtungen weiter zu verbessern und einen Werkzeugkopf mit einem Schieber bereitzustellen, in dem der Schieber auch bei sehr großen Zerspankräften und Fliehkräften, wie sie bei der spanenden Bearbeitung von Werkstücken mit hohen Drehzahlen auftreten, präzise einstellbar ist und im Einsatz präzise positioniert bleibt.

Zur Lösung dieser Aufgabe wird die in im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, den Schieber mit einer parallel zur Werkzeugkopfachse wirkenden Klemmkraft nahezu verformungsfrei zu beaufschlagen. Dementsprechend wird erfindungsgemäß vorgeschlagen, dass die Klemmeinrichtung einen parallel zu der Werkzeugkopfachse verstellbaren Klemmkörper aufweist, der in einer Klemmstellung eine Gleitfläche des Schiebers unter Einleitung einer Klemmkraft gegen eine Führungsfläche der Schieberführung drückt. Indem die Richtung der mit der Klemmeinrichtung in den Schieber einleitbaren Klemmkraft zu der Werkzeugkopfachse parallel ist, können die beim Klemmen des Schiebers auftretenden Verformungskräfte, die eine quer zu der Werkzeugkopfachse verlaufende Kraftkomponente haben, gering gehalten werden. Dies bewirkt auch, dass die Richtung der auf den Schieber wirkenden Klemmkraft bei einem Festlegen des Schiebers in der Schieberführung nicht verändert wird und dass der Schieber in der Schieberführung beim Festklemmen nicht verlagert wird.

Bevorzugt ist der Klemmkörper in einer in dem Grundkörper im seitlichen Abstand zu der Werkzeugkopfachse ausgebildeten Linearführung verstellbar, so dass die Richtung der Krafteinleitung genau definiert ist.

Gemäß die Ausgestaltung liegt der Klemmkörper für das Einleiten einer Klemmkraft (F_{N}) in den Schieber als zweiseitiger Hebel auf einer schieberseitigen Anlagefläche und einer grundkörperseitigen Anlagefläche an. Mit dieser Maßnahme können hohe Kräfte parallel zu der Werkzeugkopfachse in die an dem Werkzeugkopf ausgebildete Schieberführung eingeleitet werden.

Für die Kraftübertragung ist es günstig, wenn die schieberseitige Anlagefläche und die grundkörperseitige Anlagefläche in einer gemeinsamen Ebene oder in zueinander parallelen Ebenen liegen, und wenn der Klemmkörper über eine Fußfläche überstehende Spannkufen zur Kraftübertragung auf den Schieber und den Grundkörper aufweist.

Um den Klemmkörper gegen die Anlagefläche an dem Schieber und die Anlagefläche an dem Grundkörper zu drücken, enthält die Klemmeinrichtung eine den Klemmkörper durchgreifende, in den Grundkörper vorzugsweise von dessen Stirnseite her einschraubbare Klemmschraube. Mit einer solchen Klemmschraube können die auf den Schieber wirkenden Klemmkräfte einfach und sehr exakt eingestellt werden.

Indem die Klemmeinrichtung ein auf dem Klemmkörper abgestütztes Federelement, insbesondere eine Tellerfeder zum gedämpften Aufbauen einer Klemmkraft (F_{N}) aufweist, kann gewährleistet werden, dass die auf den Schieber wirkenden Klemmkräfte beim Festklemmen sanft ansteigen, so dass dieser sich beim Festklemmen nicht verlagert und in der Schieberführung nicht verkanten kann.

Vorteilhafterweise definieren die Verstellachse des Klemmkörpers und die Werkzeugkopfachse eine zur Bewegungsrichtung des Schiebers senkrechte Ebene.

Ein weiterer wichtiger Aspekt der Erfindung liegt in einer Messeinrichtung zur automatischen Positionserfassung des Schiebers, die in Bewegungsrichtung des Schiebers im Abstand zur der Werkzeugkopfachse angeordnet ist. Durch diese Positionierung lassen sich nachteilige Einflüsse der Schieberklemmung auf eine möglichst genaue Positionsbestimmung weitgehend vermeiden.

Hierbei ist es günstig, wenn das Zentrum der Messeinrichtung und die Verstellachse des Klemmkörpers in etwa gleichem Abstand zu der Werkzeugkopfachse liegen. Unter "etwa gleichem Abstand" sollen auch Abstandsdifferenzen von bis zu 10% verstanden werden.

Eine weitere Verbesserung hinsichtlich einer robusten Messung lässt sich dadurch erreichen, dass die Messeinrichtung die Position des Schiebers in einem Bereich der Schieberführung erfasst, der in einer zu der Werkzeugkopfachse senkrechten Ebene liegt.

Von Vorteil ist es auch, wenn die Messeinrichtung einen positionsempfindlichen Sensorbaustein für eine absolute Positionserfassung des Schiebers aufweist, so dass eine selbsttätige Dejustierung der Messeinrichtung insbesondere im ausgeschalteten Zustand vermieden wird und etwaige Abweichungen von der Sollposition verlässlich gemessen und angezeigt werden.

Zu diesem Zweck kann die Messeinrichtung eine bevorzugt zweidimensional ortsauflösende Photodiode als Lichtsensor zur Lageerfassung eines mittels einer Punktlichtquelle erzeugten Leuchtflecks aufweisen. Die Lichtquelle kann an dem Schieber oder dem Grundkörper angeordnet sein, während umgekehrt der positionsempfindliche Lichtsensor an dem Grundkörper oder dem Schieber aufgenommen ist. Denkbar ist es auch, dass die Messeinrichtung beispielsweise ein kapazitives oder induktives Wegmesssystem enthält.

Vorteilhafterweise ist in dem Grundkörper mindestens ein gegenläufig zu dem Schieber zwangsgekoppeltes Ausgleichgewichtsstück zum Unwuchtausgleich angeordnet. Hierbei lassen sich besondere konstruktive Vorteile dadurch erreichen, dass der Klemmkörper nur auf den Schieber einwirkt und das Ausgleichgewichtsstück unter Einwirkung der Fliehkraft bei Drehung des Grundkörpers selbsthemmend ist.

Indem die in dem Grundkörper ausgebildete Schieberführung für den Schieber mittels eines Deckelelements bzw. Verstärkungsteils, das einen oder mehrere Stege hat, die den Schieber übergreifen, gegen Aufspreizen gesichert wird, lässt sich auch bei hohen Rotationsdrehzahlen ein fester Sitz für den Schieber im Werkzeugkopf und damit eine präzise und vibrationsfreie Werkstückbearbeitung gewährleisten.

Wenn der Grundkörper eine zu dem Schieber durchgreifende Zentralbohrung aufweist, die eine Öffnung zu einem in dem Schieber verlaufenden Kanal hat, ist es möglich, ein an dem Schieber aufgenommenes Schneidwerkzeug durch den Grundkörper hindurch mit Kühlschmierstoff zu beaufschlagen.

Bevorzugt ist für das Bewegen des Schiebers in der Linearführung eine Verstelleinrichtung vorgesehen, die den Schieber gegen eine Rückstellkraft bewegt. Diese Rückstellkraft wird mit einem Krafterzeugungsmittel erzeugt, das an dem Grundkörper abgestützt ist und auf den Schieber wirkt. Das Krafterzeugungsmittel kann z.B. als Feder ausgebildet sein. Als Verstelleinrichtung für den Schieber eignet sich insbesondere eine drehbare Hülse, die mittels eines Gewindes auf ein mit dem Schieber gekoppeltes, als Zapfen ausgebildetes Anschlusselement einwirkt, das entlang einer die Werkzeugkopfachse schneidenden Verstellachse bewegbar ist. Bevorzugt hat der Zapfen einen Verzahnungsabschnitt, der mit einem an dem Schieber ausgebildeten hierzu komplementären Verzahnungsabschnitt kämmt und der eine drehfeste Verbindung von Schieber und Zapfen bewirkt. Damit lässt sich vermeiden, dass bei Einleiten eines versehentlichen Überdrehmoments in die Verstelleinrichtung für den Schieber, z.B. wenn der Schieber blockiert ist, der Zapfen von dem Schieber gelöst werden kann. Von Vorteil ist es, eine Verlagerbarkeit des Schiebers quer zu der Werkzeugkopfachse vorzusehen und dabei zu gewährleisten, dass die mittels der Klemmeinrichtung in den Schieber einleitbare Normalkraft (F_{N}) eine zu der Werkzeugkopfachse parallele Kraftkomponente hat. Hierdurch lässt sich erreichen, dass die Verstelleinrichtung für den Schieber nicht durch Klemmkräfte belastet wird.

Bevorzugt besteht der Schieber aus hochfestem Aluminium. Günstig ist es, wenn der Schieber eine gehärtete Oberfläche mit einer Oxidschicht hat.

Darüber hinaus ist es günstig, wenn der Schieber mit mehreren, unterschiedlich genormten Schnittstellen für das Festlegen von Schneidwerkzeugen ausgebildet ist. Dann können an dem Werkzeugkopf verschiedene Schneidwerkzeuge betrieben werden, die unterschiedlichen Schnittstellennormen entsprechen.

Im Folgenden wird die Erfindung anhand des in der Zeichnung in schematischer Weise dargestellten Ausführungsbeispiels näher erläutert. Es zeigen:
- Fig. 1 und Fig. 2: zwei unterschiedliche Seitenansichten eines Werkzeugkopfs mit Schieber;
- Fig. 3: den Werkzeugkopf in einer Draufsicht;
- Fig. 4: einen Schnitt des Werkzeugkopfs entlang der Linie IV - IV in Fig. 2;
- Fig. 5: einen Schnitt des Werkzeugkopfs entlang der Linie V - V in Fig. 3;
- Fig. 6: einen Ausschnitt aus Fig. 5, in dem eine Verstelleinrichtung für den Schieber vergrößert gezeigt ist;
- Fig. 7: einen Schnitt des Werkzeugkopfs entlang der Linie VII - VII in Fig.1;
- Fig. 8: eine Messeinrichtung in dem Werkzeugkopf;
- Fig. 9: einen Schnitt des Werkzeugkopfs entlang der Linie IX - IX in Fig. 3;
- Fig. 10: einen Schnitt des Werkzeugkopfs entlang der Linie X - X in Fig.2;
- Fig. 11: einen Schnitt des Werkzeugkopfs entlang der Linie XI - XI in Fig. 5.

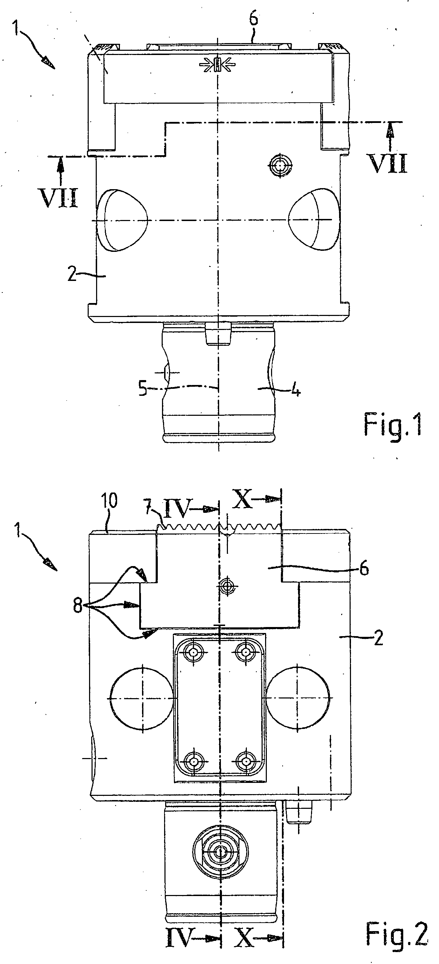

Der in Fig. 1 und 2 dargestellte Werkzeugkopf 1 dient zur Aufnahme von Schneidwerkzeugen und ist für den Anschluss an die rotierende Maschinenspindel einer Werkzeugmaschine ausgelegt. Der Werkzeugkopf 1 umfasst einen Grundkörper 2, an dem ein beweglicher Schieber 6 aufgenommen ist. Der Schieber 6 ist in einer am Grundkörper 2 ausgebildeten Schieberführung 8 linearbeweglich geführt und besitzt einen Verzahnungsabschnitt 7 für die Aufnahme eines nicht weiter dargestellten Schneidwerkzeugs. Für den Anschluss an die Maschinenspindel ist der Grundkörper 2 mit einem Passzapfen 4 versehen. Der Werkzeugkopf 1 hat eine Werkzeugkopfachse 5, die bei Anschluss an die rotierende Maschinenspindel der Werkzeugmaschine als Drehachse wirkt.

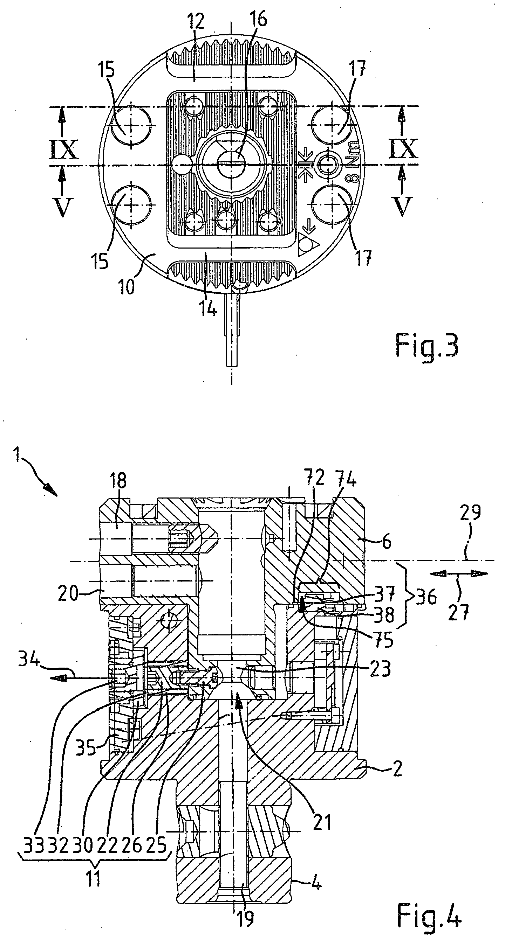

Wie die Fig. 3 zeigt, umfasst die Schieberführung 8 für den Schieber 6 ein Deckelelement 10. Der Schieber 6 ist in der Schieberführung 8 unter dem Deckelelement 10 geführt. Das Deckelelement 10 hat Stege 12, 14, die den Schieber 6 übergreifen und ist mittels Schrauben 15, 17 an dem Grundkörper 2 festgelegt. Das Deckelelement 10 stabilisiert die Schieberführung 8 für den Schieber 6 im Grundkörper 2.

In dem Schieber 6 ist eine Bohrung 16 für die Aufnahme eines Zylinderschafts des Schneidwerkzeugs ausgebildet. Die Bohrung 16 ermöglicht das Aufnehmen von Schneidwerkzeugen an dem Schieber 6 mit unterschiedlichen Schnittstellen. Hierzu gibt es, wie die Fig. 4 zeigt, in dem Schieber 6 eine Ausnehmung 18 für einen ersten Klemmmechanismus und dazu versetzt eine Ausnehmung 20 für einen zweiten Klemmmechanismus.

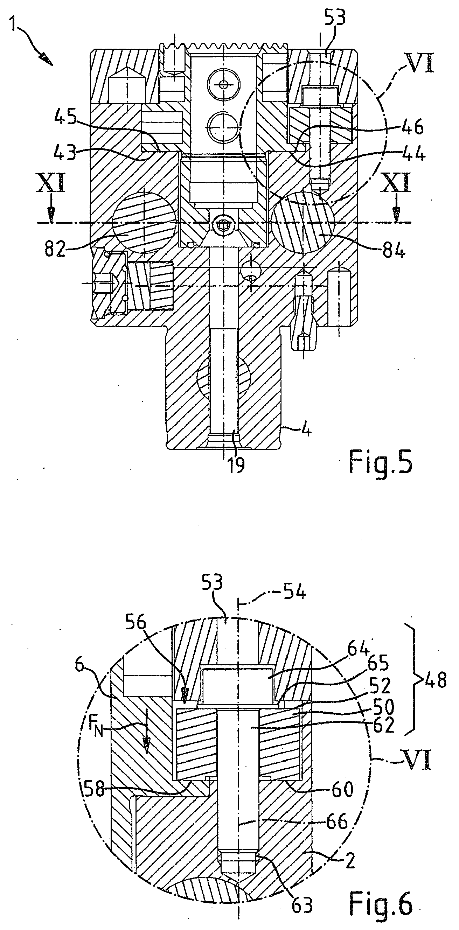

Die Schieberführung 8 ist als Gleitlager ausgebildet. Wie die Fig. 5 zeigt, ist die Schieberführung 8 mit Führungsflächen 43, 44 ausgebildet. Die Führungsflächen 43, 44 liegen an Gleitflächen 45, 46 des Schiebers 6 an.

Der Werkzeugkopf 1 umfasst verlagerbare Ausgleichsgewichte 82, 84. Die Ausgleichsgewichte 82, 84 sind mit dem Schieber 6 gekoppelt. Die Ausgleichsgewichte 82, 84 dienen für den Ausgleich der Unwucht, die durch das Verlagern des Schiebers 6 im Werkzeugkopf hervorgerufen wird.

Der Werkzeugkopf 1 enthält eine Verstelleinrichtung 11 für den Schieber 6. Die Verstelleinrichtung 11 umfasst eine Gewindebuchse 26, die einen Eingriff 33 für einen Inbusschlüssel hat. Die Verstelleinrichtung 11 kann so mittels eines Inbusschlüssels betätigt werden.

Die Gewindebuchse 26 wirkt auf einen Gewindezapfen 22, der über eine Schraube 25 an dem Schieber 6 festgelegt ist. Der Gewindezapfen 22 hat ein Außengewinde, das mit einem an der Gewindebuchse 26 ausgebildeten Innengewinde in Eingriff steht. Durch Verdrehen der Gewindebuchse 26 kann der Schieber 6 entsprechend dem Doppelpfeil 27 entlang der Bewegungsachse 29 bewegt werden. Mittels der vorstehend angeführten Verzahnungsabschnitte wird eine drehfeste Verbindung des Gewindezapfens 22 mit dem Schieber 6 bewirkt, so dass auch bei Einleiten eines versehentlichen Über-Drehmoments in die Gewindebuchse 26, z.B. wenn der Schieber blockiert ist, sich der Schieber und der Gewindezapfen 22 nicht selbsttätig lösen können.

Die Gewindebuchse 26 hat einen mit Flanschform ausgebildeten Abschnitt 30, der gegen eine Tellerfeder 32 an dem Grundkörper 2 des Werkzeugkopfs 1 abgestützt ist. Die Tellerfeder 32 drückt den Abschnitt 30 der Gewindebuchse 26 in Richtung des Pfeils 34 gegen ein Deckelelement 35, das an dem Grundkörper 2 festgelegt ist.

In dem Grundkörper 2 des Werkzeugkopfs 1 gibt es eine durch den Passzapfen 4 verlaufende Bohrung 19, die zu dem Schieber 6 in der Schieberführung 8 durchgreift. Dort mündet die Bohrung 19 in einen trichterförmigen Abschnitt 21 eines in dem Schieber 6 ausgebildeten Kanals 23. Der Kanal 23 verbindet die Bohrung 16 für das Aufnehmen von Schneidwerkzeugen an dem Schieber 6 mit der Bohrung 19 im Grundkörper 2. Durch die im Passzapfen 4 verlaufende Bohrung 19 kann damit Kühlschmierstoff des Werkzeugkopfs 1 zu einem an dem Schieber 6 aufgenommenen Schneidwerkzeug zugeführt werden. Der zu der Bohrung 19 hin sich erweiternde trichterförmige Abschnitt 21 des in dem Schieber 6 ausgebildeten Kanals 23 gewährleistet dabei, dass bei einem Verlagern des Schiebers 6 an dem Grundkörper 2 im Werkzeugkopf 1 der wirksame Öffnungsquerschnitt für den Durchtritt von Kühlschmierstoff zu einem Schneidwerkzeug im Wesentlichen unabhängig von einer Einstellung des Schiebers 6 ist und einen harmonischen, die Durchleitung des Kühlschmierstoffs begünstigenden Verlauf bildet.

Die Fig. 6 zeigt einen Abschnitt des Schiebers 6 im Werkzeugkopf 1 mit der Führungsfläche 44 der Schiebeführung 8. Die Führungsfläche 44 kann mittels einer an dem Grundkörper 2 aufgenommenen Klemmeinrichtung 48 mit einer den Schieber 6 in dem Grundkörper 2 festlegenden Klemmkraft F_{N} beaufschlagt werden. Die mit der Klemmeinrichtung 48 erzeugte Klemmkraft F_{N} drückt die Gleitfläche 46 des Schiebers 2 gegen die Führungsfläche 44. Die Richtung der mit der Klemmeinrichtung 48 in den Schieber 6 einleitbaren Klemmkraft F_{N} ist zu der Werkzeugkopfachse 5 parallel. Der Schieber 6 ist in der Schieberführung 8 mit einer sowohl zu der Drehachse 5 als auch zu der Richtung der mit der Klemmeinrichtung 48 in den Schieber 6 einleitbaren Klemmkraft F_{N} senkrechten Bewegungsachse 29 linearbeweglich geführt.

Die Klemmeinrichtung 48 hat einen Klemmkörper 50, der in einer in dem Grundkörper 2 ausgebildeten Linearführung 52 mit einer zu der Werkzeugkopfachse 5 parallelen Bewegungsachse 54 angeordnet ist. Der in der Linearführung 52 linearbeweglich geführte Klemmkörper 50 ragt in eine an dem Schieber 6 ausgebildete Aussparung 56. Der Klemmkörper 50 liegt für das Einleiten einer Klemmkraft F_{N} in den Schieber 6 auf einer an dem Schieber 6 ausgebildeten Anlagefläche 58 und einer an dem Grundkörper 2 ausgebildeten Anlagefläche 60 an. Hierfür besitzt der Klemmkörper 50 an seiner Fußfläche abgestufte Spannkufen, so dass Positionstoleranzen besser ausgleichbar sind. Die Anlagefläche 60 ist zu der Anlagefläche 58 an dem Schieber 6 parallel. Die Klemmeinrichtung 48 enthält eine den Klemmkörper 50 durchgreifende Klemmschraube 62. Die Klemmschraube 62 ist in einem in dem Grundkörper 2 ausgebildeten Gewinde 63 verankert. Die Klemmschraube 62 kann mittels eines Inbusschlüssels durch eine Bohrung 53 in dem Deckelelement 10 verstellt werden. Mit der Klemmschraube 62 kann der Klemmkörper 50 gegen die Anlagefläche 58 an dem Schieber 6 und die Anlagefläche 60 an dem Grundkörper 2 gedrückt werden. Zweckmäßig können die Anlageflächen 58, 60 am Klemmkörper 50 gerundet oder ballig ausgeführt werden, wodurch Toleranzen der beaufschlagten Gegenflächen überbrückt werden.

Die Klemmschraube 62 hat einen Schraubenkopf 64, der auf eine Tellerfeder 65 wirkt, die an dem Klemmkörper 60 anliegt. Die Tellerfeder 65 gewährleistet ein allmähliches und stetiges Ansteigen der Klemmkraft F_{y}, die mit dem Klemmkörper 50 in den Schieber 6 eingeleitet wird, wenn die Klemmschraube 62 festgelegt wird. Die Achse 66 der Klemmschraube 62 und die Werkzeugkopfachse 5 definieren eine zu der Bewegungsrichtung 29 des Schiebers 6 senkrechte Ebene.

Wie die Fig. 4 zeigt, enthält der Werkzeugkopf 1 eine Messeinrichtung 36 für das Erfassen der Einstellung des Schiebers 6. Die Messeinrichtung 36 umfasst eine Lichtquelle 37, die in einer Ausnehmung 75 an einem Abschnitt 74 des Schiebers 6 festgelegt ist. Dieser Lichtquelle 37 ist ein an dem Grundkörper 2 aufgenommener PSD-Baustein (Position Sensitive Device) 38 zugeordnet. Der PSD-Baustein enthält einen positionsempfindlichen Lichtsensor. Mittels des PSD-Bausteins 38 kann die Position der Lichtquelle 37 und damit die Stellung des Schiebers 6 elektronisch detektiert werden.

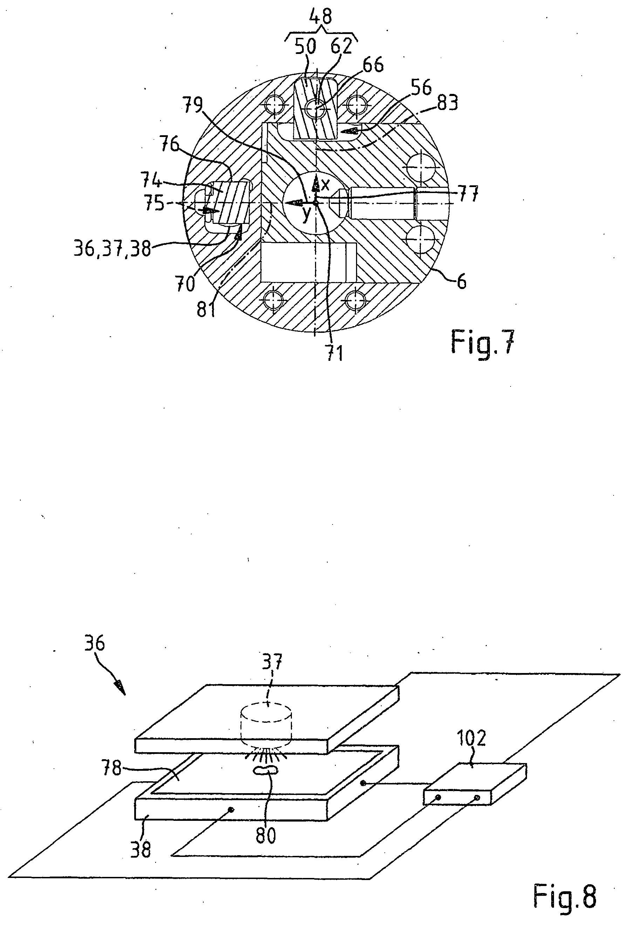

In dem in Fig. 7 veranschaulichten schieberfesten Koordinatensystem, das eine zu der Werkzeugkopfachse 5 parallele z-Achse 71 hat, zeigt die zu der x-Achse 77 parallele Gerade 83 durch die Werkzeugkopfachse 5 zu der Seite der Aussparung 56 und durchsetzt die Klemmeinrichtung 48. In einem solchen Koordinatensystem ist die Ausnehmung 75 des Schiebers 6 auf einer zu der y-Achse 79 dieses Koordinatensystems parallelen Gerade 81 angeordnet, welche die Werkzeugkopfachse 5 schneidet. Dabei entspricht der Abstand der Aussparung 56 von der z-Achse dieses Koordinatensystems in etwa dem Abstand der Ausnehmung 76 des Schiebers 6 von der z-Achse des Koordinatensystems. Diese Maßnahme gewährleistet, dass das Festklemmen des Schiebers 6 den Körper des Schiebers 6 im Bereich der Ausnehmung 75 in der Richtung der y-Achse 79 des Koordinatensystems nicht verformt. Die Messeinrichtung 36 einerseits und die Klemmeinrichtung 48 andererseits liegen damit in voneinander verschiedenen Hauptsteifigkeitsachsen des Werkzeugkopfs 1.

Die Messeinrichtung 36 erfasst die Position des Schiebers 6 in einem Bereich 70 der Schieberführung 8. In dem Bereich 70 liegt die in der Fig. 4 gezeigte Gleitfläche 72 des Schiebers 6 in der Schieberführung 8 in einer zu der Werkzeugkopfachse 5 senkrechten Ebene. Die Ausnehmung 75 in dem Abschnitt 74 des Schiebers 6 ist mit der Gleitfläche 72 umgeben.

In dem den Abschnitt 74 umgebenden Bereich des Schiebers 6 ist der Körper Schiebers 6 massiv und nicht durch Ausnehmungen oder Bohrungen geschwächt. Damit wird erreicht, dass das mit der Messeinrichtung 36 erfasste Messsignal von der in den Schieber eingeleiteten Klemmkraft F_{N} unabhängig ist.

Die Fig. 8 zeigt die Messeinrichtung 36 in dem Werkzeugkopf 1 in einer schematischer Ansicht. Die Lichtquelle 37 in der Messeinrichtung 36 erzeugt auf dem positionsempfindlichen Lichtsensor 78 des PSD-Bausteins 38 einen Lichtfleck 80. Die Messeinrichtung 36 ist mit einer Auswerteschaltung 102 verbunden. Mit der Auswerteschaltung 102 kann ein zweidimensionales Spannungssignal Q1 (U₁, U₂) erfasst werden, das die Information der Position des Lichtflecks 80 auf dem Lichtsensor 78 enthält.

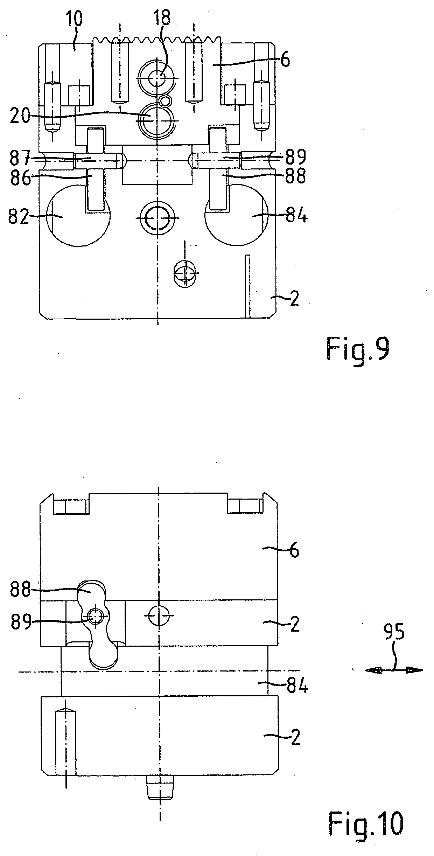

Für die Kopplung der Ausgleichsgewichte 82, 84 mit dem Schieber 6 enthält der Werkzeugkopf 1 zwei Schwenkhebel 86, 88, die in Fig. 9 und Fig. 10 zu sehen sind. Die Schwenkhebel 86, 88 sind auf Wellen 87, 89 in dem Grund- , körper 2 schwenkbeweglich gelagert. Mittels der Schwenkhebel 86, 88 sind die Ausgleichsgewichte 82, 84 mit dem Schieber 6 gegenläufig zwangsgekoppelt. Damit bewirken die Ausgleichsgewichte 82, 84 einen Unwuchtausgleich, wenn der Schieber 6 bewegt wird.

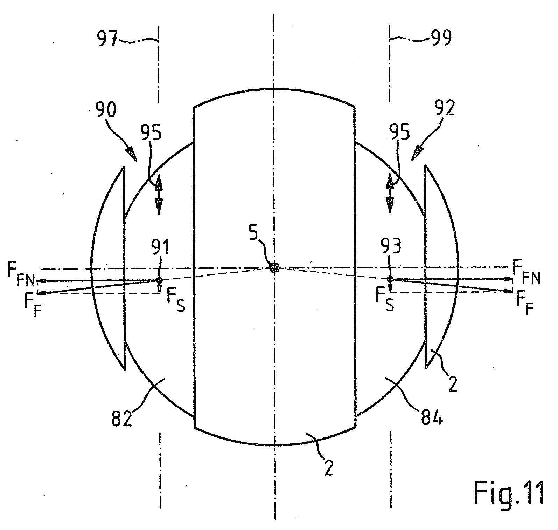

Fig. 11 zeigt die Ausgleichsgewichte 82, 84 im Längsschnitt in einer zur Werkzeugkopfachse 5 senkrechten Ebene. Die Ausgleichsgewichte 82, 84 haben eine zylindrische Mantelfläche und sind in Bohrungen 90, 92 an dem Grundkörper des Werkzeugkopfs 1 geführt. Darin werden sie aufgrund der Kopplung durch die Schwenkhebel 86, 88 mit dem Schieber 6 in Richtung der Doppelpfeile 90, 92 gegenläufig an dem Schieber 6 bewegt.

Die bei einem Rotieren des Werkzeugkopfs 1 um die Werkzeugkopfachse 5 im Schwerpunkt 91, 93 der Ausgleichsgewichte 82, 84 angreifende Fliehkraft F_{F} hat eine Normalkraftkomponente F_{FN}, welche die Ausgleichsgewichte gegen den nach außen weisenden Bereiche der Bohrungen 90, 92 im Grundkörper 2 des Werkzeugkopfs 1 drückt. In dem durch die Geometrie der Schwenkhebel 86, 88 definierten Verlagerungsbereich für die Ausgleichsgewichte 82, 84 bewirkt die Normalkraftkomponente F_{FN} eine Reibkraft F_{R}, die einer selbsttätigen Bewegung der Ausgleichsgewichte 82, 84 in den Bohrungen 90, 92 entgegenwirkt. Die Reibkraft F_{R} ist hier stets größer als die im Schwerpunkt 91, 93 in der Richtung der Achse 97, 99 der Bohrungen 90, 92 angreifende Komponente F_{S} der Fliehkraft F_{F}. Hierdurch wird eine selbsthemmende Führung der Ausgleichsgewichte 82, 84 in den Bohrungen 90, 92 erzielt.

## Patentansprüche

1. Werkzeugkopf für eine Werkzeugmaschine mit einem um eine Werkzeugkopfachse (5) drehbaren Grundkörper (2), einem an dem Grundkörper (2) in einer Schieberführung (8) quer zur Werkzeugkopfachse (5) linearbeweglich geführten Schieber (6) zur Aufnahme eines Schneidwerkzeugs und einer Klemmeinrichtung (48) zum Festklemmen des Schiebers (6) an dem Grundkörper (2), wobei die Klemmeinrichtung (48) einen parallel zu der Werkzeugkopfachse (5) verstellbaren Klemmkörper (50) aufweist, der in einer Klemmstellung eine Gleitfläche (46) des Schiebers (6) unter Einleitung einer Klemmkraft (F_{N}) gegen eine Führungsfläche (44) der Schieberführung (8) drückt, **dadurch gekennzeichnet, dass** der Klemmkörper (50) für das Einleiten einer Klemmkraft (F_{N}) in den Schieber (6) als zweiseitiger Hebel auf einer schieberseitigen Anlagefläche (58) und einer grundkörperseitigen Anlagefläche (60) anliegt.

2. Werkzeugkopf nach Anspruch 1, **dadurch gekennzeichnet, dass** der Klemmkörper (50) in einer in dem Grundkörper (2) im seitlichem Abstand zu der Werkzeugkopfachse (5) ausgebildeten Linearführung (52) verstellbar ist.

3. Werkzeugkopf nach Anspruch 1 oder 2; **dadurch gekennzeichnet, dass** die schieberseitige Anlagefläche (58) und die grundkörperseitige Anlagefläche (60) in einer gemeinsamen Ebene oder in zueinander parallelen Ebenen liegen.

4. Werkzeugkopf nach einem der Ansprüche 1 oder 3, **dadurch gekennzeichnet, dass** der Klemmkörper (50) über eine Fußfläche überstehende Spannkufen zur Kraftübertragung auf den Schieber (6) und den Grundkörper (2) aufweist.

5. Werkzeugkopf nach einem der Ansprüche 1 bis 4, **dadurch gekennzeichnet, dass** die Klemmeinrichtung (48) eine den Klemmkörper (50) durchgreifende, in den Grundkörper (2) vorzugsweise von dessen Stirnseite her einschraubbare Klemmschraube (62) enthält.

6. Werkzeugkopf nach einem der Ansprüche 1 bis 5, **dadurch gekennzeichnet, dass** die Klemmeinrichtung (48) ein auf dem Klemmkörper (50) abgestütztes Federelement, insbesondere eine Tellerfeder (65) zum gedämpften Aufbauen einer Klemmkraft (F_{N}) aufweist.

7. Werkzeugkopf nach einem der Ansprüche 1 bis 6, **gekennzeichnet, durch** eine in Bewegungsrichtung (29) des Schiebers (6) im Abstand zur der Werkzeugkopfachse (5) angeordnete Messeinrichtung (36) zur Positionserfassung des Schiebers (6).

8. Werkzeugkopf nach Anspruch 7, **dadurch gekennzeichnet, dass** die Messeinrichtung (36) und die Verstellachse (66) des Klemmkörpers (50) in etwa gleichem Abstand zu der Werkzeugkopfachse (5) liegen.

9. Werkzeugkopf nach Anspruch 7 oder 8, **dadurch gekennzeichnet, dass** die Messeinrichtung (36) die Position des Schiebers (6) in einem Bereich der Schieberführung (8) erfasst, der in einer zu der Werkzeugkopfachse (5) senkrechten Ebene liegt.

10. Werkzeugkopf nach einem der Ansprüche 7 bis 9, **dadurch gekennzeichnet, dass** die Messeinrichtung (36) einen positionsempfindlichen Sensorbaustein für eine absolute Positionserfassung des Schiebers (6) aufweist.

11. Werkzeugkopf einem der Ansprüche 7 bis 9, **dadurch gekennzeichnet, dass** die Messeinrichtung (36) einen ortsauflösenden Lichtsensor (78) zur Lageerfassung eines mittels einer Punktlichtquelle (37) erzeugten Leuchtflecks (80) aufweist.

12. Werkzeugkopf nach einem der Ansprüche 1 bis 11, **dadurch gekennzeichnet, dass** in dem Grundkörper (2) mindestens ein gegenläufig zu dem Schieber (6) zwangsgekoppeltes Ausgleichgewichtsstück (82, 84) zum Unwuchtausgleich angeordnet ist, wobei der Klemmkörper (50) nur auf den Schieber (6) einwirkt und das Ausgleichgewichtsstück (82, 84) unter Einwirkung der Fliehkraft bei Drehung des Grundkörpers (2) selbsthemmend ist.

13. Werkzeugkopf nach einem der Ansprüche 1 bis 12, **dadurch gekennzeichnet, dass** die Schieberführung (8) mittels eines den Schieber (6) wenigstens abschnittsweise übergreifenden und in dem Grundkörper verankerten Verstärkungsteils (10) stabilisiert ist.

14. Werkzeugkopf nach einem der Ansprüche 1 bis 13, **dadurch gekennzeichnet, dass** der Grundkörper (2) eine zu dem Schieber (6) durchgreifende Zentralbohrung (19) aufweist, die eine Öffnung zu einem in dem Schieber (6) verlaufenden Kanal (23) hat, um ein an dem Schieber (6) aufgenommenes Schneidwerkzeug mit Kühlschmierstoff zu beaufschlagen.

15. Werkzeugkopf nach Anspruch 14, **dadurch gekennzeichnet, dass** der Kanal (23) an dem Schieber (6) einen sich zu der Zentralbohrung (19) des Grundkörpers (2) hin vorzugsweise trichterförmig erweiternden Abschnitt (21) für eine störungsarme Durchleitung des Kühlschmierstoffs aufweist.

## Claims

1. A tool head for a machine tool, having a main body (2) which is rotatable about a tool head axis (5), a slide (6) for holding a cutting tool, said slide being guided on the main body (2) in a slide guide (8) in a linearly movable manner transversely to the tool head axis (5), and a clamping device (48) for clamping the slide (6) on the main body (2), wherein the clamping device (48) has a clamping body (50) which is adjustable parallel to the tool head axis (5) and, in a clamping position, presses a sliding surface (46) of the slide (6) against a guiding surface (44) of the slide guide (8) with a clamping force (FN) being introduced, **characterized in that** in order to introduce a clamping force (FN) into the slide (6), the clamping body (50) bears as a two-sided lever on an abutment surface (58) of the slide and an abutment surface (60) of the main body.

2. The tool head as claimed in claim 1, **characterized in that** the clamping body (50) is adjustable in a linear guide (52) formed in the main body (2) at a lateral distance from the tool head axis (5).

3. The tool head as claimed in claim 1 or 2, **characterized in that** the abutment surface (58) on the slide and the abutment surface (60) on the main body are located in a common plane or in planes that are parallel to one another.

4. The tool head as claimed in either of claims 1 and 3, **characterized in that** the clamping body (50) has clamping runners, projecting beyond a foot surface, for transmitting force to the slide (6) and the main body (2).

5. The tool head as claimed in one of claims 1 to 4, **characterized in that** the clamping device (48) contains a clamping screw (62) that passes through the clamping body (50) and is screwable into the main body (2) preferably from the end side thereof.

6. The tool head as claimed in one of claims 1 to 5, **characterized in that** the clamping device (48) has a spring element supported on the clamping body (50), in particular a disk spring (65) for the damped build up of a clamping force (FN).

7. The tool head as claimed in one of claims 1 to 6, **characterized by** a measuring device (36), arranged at a distance from the tool head axis (5) in the direction of movement (29) of the slide (6), for detecting the position of the slide (6).

8. The tool head as claimed in claim 7, **characterized in that** the measuring device (36) and the adjustment axis (66) of the clamping body (50) are located at approximately the same distance from the tool head axis (5).

9. The tool head as claimed in claim 7 or 8, **characterized in that** the measuring device (36) detects the position of the slide (6) in a region of the slide guide (8) that is located in a plane perpendicular to the tool head axis (5).

10. The tool head as claimed in one of claims 7 to 9, **characterized in that** the measuring device (36) has a position sensitive sensor module for absolute detection of the position of the slide (6).

11. The tool head as claimed in one of claims 7 to 9, **characterized in that** the measuring device (36) has a spatially resolving light sensor (78) for detecting the position of a light spot (80) produced by means of a point light source (37).

12. The tool head as claimed in one of claims 1 to 11, **characterized in that** at least one counterweight piece (82, 84), permanently coupled in the opposite direction to the slide (6), for unbalance compensation is arranged in the main body (2), wherein the clamping body (50) acts only on the slide (6) and the counterweight piece (82, 84) is self-locking under the action of the centrifugal force during rotation of the main body (2).

13. The tool head as claimed in one of claims 1 to 12, **characterized in that** the slide guide (8) is stabilized by means of a reinforcement part (10) that engages at least sectionally over the slide (6) and is anchored in the main body.

14. The tool head as claimed in one of claims 1 to 13, **characterized in that** the main body (2) has a central bore (19) that passes through as far as the slide (6) and has an opening to a duct (23) extending in the slide (6) in order to apply cooling lubricant to a cutting tool held on the slide (6).

15. The tool head as claimed in claim 14, **characterized in that** the duct (23) in the slide (6) has a section (21) that widens preferably in the form of a funnel toward the central bore (19) in the main body (2), so that the cooling lubricant can pass through in a trouble-free manner.

## Revendications

1. Tête d'outil pour une machine-outil comprenant un corps de base (2) pouvant tourner autour d'un axe (5) de tête d'outil, un coulisseau (6) guidé de manière linéairement mobile transversalement audit axe (5) de tête d'outil sur le corps de base (2) dans une coulisse (8) destiné à recevoir un outil de coupe, et un dispositif de serrage (48) pour bloquer le coulisseau (6) sur le corps de base (2), le dispositif de serrage (48) présentant un corps de serrage (50) déplaçable parallèlement à l'axe (5) de tête d'outil et qui pousse dans une position de serrage une surface de glissement (46) du coulisseau (6) contre une surface de guidage (44) de la coulisse (8) en introduisant une force de serrage (F_{N}), **caractérisée en ce que** le corps de serrage (50), pour introduire une force de serrage (F_{N}) dans le coulisseau (6), est appliqué en tant que double levier sur une surface d'appui (58) côté coulisseau et une surface d'appui (60) côté corps de base.

2. Tête d'outil selon la revendication 1, **caractérisée en ce que** le corps de serrage (50) est déplaçable dans un guide linéaire (52) formé dans le corps de base (2) à distance latérale de l'axe (5) de tête d'outil.

3. Tête d'outil selon la revendication 1 ou 2, **caractérisée en ce que** la surface d'appui (58) côté coulisseau et la surface d'appui (60) côté corps de base sont situées dans un même plan ou dans des plans parallèles l'un à l'autre.

4. Tête d'outil selon l'une des revendications 1 ou 3, **caractérisée en ce que** le corps de serrage (50) présente des patins de serrage dépassant une embase, pour la transmission de force sur le coulisseau (6) et le corps de base (2).

5. Tête d'outil selon l'une des revendications 1 à 4, **caractérisée en ce que** le dispositif de serrage (48) comporte une vis de serrage (62) traversant le corps de serrage (50) et qui est vissable dans le corps de base (2) de préférence depuis la face frontale de celui-ci.

6. Tête d'outil selon l'une des revendications 1 à 5, **caractérisée en ce que** le dispositif de serrage (48) présente un élément élastique en appui sur le corps de serrage (50), notamment une rondelle Belleville (65) pour le déploiement atténué d'une force de serrage (F_{N}).

7. Tête d'outil selon l'une des revendications 1 à 6, **caractérisée par** un dispositif de mesure (36) placé dans le sens de déplacement (29) du coulisseau (6) à distance de l'axe (5) de tête d'outil, pour la détection de position du coulisseau (6).

8. Tête d'outil selon la revendication 7, **caractérisée en ce que** le dispositif de mesure (36) et l'axe de déplacement (66) du corps de serrage (50) se trouvent à distance approximativement égale de l'axe (5) de tête d'outil.

9. Tête d'outil selon la revendication 7 ou 8, **caractérisée en ce que** le dispositif de mesure (36) détecte la position du coulisseau (6) dans une zone de la coulisse (8) située dans un plan perpendiculaire à l'axe (5) de tête d'outil.

10. Tête d'outil selon l'une des revendications 7 à 9, **caractérisée en ce que** le dispositif de mesure (36) présente un module de détection sensible à la position, pour une détection de position absolue du coulisseau (6).

11. Tête d'outil selon l'une des revendications 7 à 9, **caractérisée en ce que** le dispositif de mesure (36) présente un capteur de lumière (78) à résolution locale, pour la détection de position d'une tâche lumineuse (80) produite par une source de lumière ponctuelle (37).

12. Tête d'outil selon l'une des revendications 1 à 11, **caractérisée en ce qu**'au moins un poids d'équilibrage (82, 84) couplé de force en sens opposé au coulisseau (6) est disposé dans le corps de base (2) pour compenser le balourd, le corps de serrage (50) agissant uniquement sur le coulisseau (6) et le poids d'équilibrage (82, 84) étant autobloquant sous l'effet de la force centrifuge lorsque le corps de base (2) tourne.

13. Tête d'outil selon l'une des revendications 1 à 12, **caractérisée en ce que** la coulisse (8) est stabilisée au moyen d'une pièce de renfort (10) qui recouvre au moins partiellement le coulisseau (6) et est ancrée dans le corps de base.

14. Tête d'outil selon l'une des revendications 1 à 13, **caractérisée en ce que** le corps de base (2) présente un alésage central (19) traversant en direction du coulisseau (6), qui est muni d'une ouverture vers un canal (23) passant dans le coulisseau (6) pour alimenter en lubrifiant réfrigérant un outil de coupe logé sur le coulisseau (6).

15. Tête d'outil selon la revendication 14, **caractérisée en ce que** le canal (23) sur le coulisseau (6) présente une partie (21) s'élargissant de préférence en forme d'entonnoir vers l'alésage central (19) du corps de base (2), pour un passage fiable du lubrifiant réfrigérant.
